## Europäisches Patentamt

## European Patent Office

## Office européen des brevets

(19)

(11) Veröffentlichungsnummer: **0 197 268**
**B1**

(12)
# EUROPÄISCHE PATENTSCHRIFT

(45) Veröffentlichungstag der Patentschrift:
**24.05.89**

(21) Anmeldenummer: **86102154.1**

(22) Anmeldetag: **19.02.86**

(51) Int. Cl.⁴: **B 23 P 15/00,** F 01 D 5/30,
B 23 K 33/00

(54) Verfahren zum Herstellen eines Regelrades für den Hochdruckrotor einer Dampfturbine.

(30) Priorität: **28.02.85 CH 910/85**

(43) Veröffentlichungstag der Anmeldung:
**15.10.86 Patentblatt 86/42**

(45) Bekanntmachung des Hinweises auf die Patenterteilung:
**24.05.89 Patentblatt 89/21**

(84) Benannte Vertragsstaaten:
**AT BE CH DE FR GB IT LI NL SE**

(56) Entgegenhaltungen:
**CH-A- 585 343
FR-A- 1 257 841
FR-A- 2 104 405
GB-A- 2 028 180
US-A- 2 423 165
US-A- 2 961 748
US-A- 3 292 245
US-A- 4 096 615**

**BBC-NACHRICHTEN, Juni 1965, Seiten 277-283,
Mannheim, DE; E.-O. MÜLLER: "Geschweisste
Turbinenläufer"**

(73) Patentinhaber: **BBC Brown Boveri AG, Haselstrasse,
CH-5401 Baden (CH)**

(72) Erfinder: **Barcella, Santino, Alte Zürcherstrasse 29,
CH-5432 Neuenhof (CH)**
Erfinder: **Befeld, Manfred, Brandenburgerstrasse 12,
D-6700 Ludwigshafen (DE)**
Erfinder: **Faber, Guy, Buacherstrasse 11,
CH-5452 Oberrohrdorf (CH)**
Erfinder: **Slepcevic, Paul, Wiesenweg 3,
CH-5415 Nussbaumen (CH)**

ACTORUM AG

## Beschreibung

Die Erfindung betrifft ein Verfahren zum Herstellen eines Regelrades für den Hochdruckrotor einer Dampfturbine. Sie bezieht sich ebenfalls auf ein solchermaßen hergestelltes Regelrad gemäß Überbegriff des Patentanspruchs 5.

Um ein gutes Teillastverhalten einer Dampfturbine zu erreichen, wird den Reaktionsstufen der Hochdruck-Teilturbine häufig eine Gleichdruckstufe als Regelstufe vorgeschaltet. Die Gleichdruckstufe kann wegen ihrer Auslegung mit kleinem Reaktionsgrad auch teilbeaufschlagt betrieben werden. Mit der Teilbeaufschlagung der Regelstufe wird der Dampfstrom durch die Turbine – und damit deren Leistung – geregelt. Die folgenden Reaktionsstufen arbeiten dagegen bei allen Lasten voll beaufschlagt.

Die Regelstufe besteht normalerweise aus einer Leitreihe und einer Laufreihe, wobei erstere mit Düsen, letztere zusammen mit dem zugehörigen Rotorteil als Laufrad bezeichnet wird.

Das Laufrad entsteht durch Aufschweißen eines vorgefertigten Regelrades auf den entsprechenden Rotorteil. Das Regelrad selbst ist ebenfalls eine Schweißkonstruktion. Das Schweißen ist gegenüber allen mechanischen Verbindungen die intensivste und homogenste. Sie bietet Gewähr, dass der Schaufel-Wellenverband die statischen Kräfte infolge Fliehkraft und die durch intermittierende Dampfströmung hervorgerufenen dynamischen Kräfte selbst bei höchsten Temperaturen ungefährdet aufnehmen kann.

Ein Herstellverfahren und ein Regelrad der eingangs genannten Art sind bekannt. Bei der Herstellung des Regelrades fräst man die Schaufeln mit ihrer Profil-, Fuß- und Deckplattenpartie aus Stangenmaterial heraus. Am Fuß und an der Deckplatte werden die einzelnen Schaufeln zusammengeschweißt und ergeben so einen kompletten Ring. Dieser wird mit einer großen Tulpennaht im Unterpulver-Verfahren auf den Rotor aufgeschweißt. Nach dem Spannungsarmglühen wird die gesamte Radpartie überdreht und somit die zur Rißbildung neigende Wurzel der Tulpennaht entfernt.

Bei dieser Methode werden die Deckplatten zu Gruppen verschweißt, abgestimmt auf Vermeidung von Schwingungsanregung durch den aus den Düsen ausströmenden Dampfstrom. Diese Gruppen setzen sich aus jeweils drei, vier oder mehr Einzelstufen zusammen. Sie sind an den Deckbändern untereinander nicht verbunden.

Um einen geschlossenen Ring zu erzielen, müssen die Einzelschaufeln resp. die Schaufelgruppen in ihren Fußzonen miteinander verbunden werden. Hierzu sind die Fußplatten in ihrer radialen Erstreckung erheblich größer bemessen als die Deckplatten. Die Schweißnähte reichen nicht bis an die strömungsbegrenzende Wand der Fußplatte heran. Demzufolge werden durch Bohrungen am Scheibenumfang die Wurzelzonen der Schweißnähte an den Schaufelfüßen entfernt, was dem geschweißten Regelrad sein charakteristisches Aussehen verleiht.

Nun handelt es sich bei den verwendeten Materialien um schwer schweißbare Werkstoffe, bspw. X22CrMoV121. Dennoch sind Schweißverbindungen herzustellen, die die gleiche Festigkeit und Zähigkeit aufweisen wie der Grundwerkstoff. Dazu muß das Schweißgut einer Vergütung unterzogen werden. Das verwendete Schweißgut, welches einen hohen C-Gehalt aufweisen muß, damit es nicht zweiphasig wird, hat aber nun die Eigenart, nicht wie niedrig legierte Stähle bei Vorwärmtemperaturen von ca. 300 °C sich langsam umzuwandeln, sondern es bleibt austenitisch und kann nur durch Abkühlen zum Umwandeln gebracht werden. Normalerweise wird deshalb das zusammengeschweißte Regelrad abgekühlt, damit die angestrebte Umwandlung stattfindet. Der dabei entstandene spröde Martensit wird anschließend durch Glühen weicher und zäher gemacht.

Von Nachteil bei dieser Lösung ist die Tatsache, daß während der genannten Abkühlphase die Schweißungen rißgefährdet sind. Zwar wird mit stärkerer Abkühlung auf tiefere Temperaturen die Umwandlung besser und es werden bessere Zähigkeiten erzielt beim anschließenden Anlassen, jedoch erhöht sich auch die Rißgefahr ganz beträchtlich. Aus diesem Grunde war es bislang nicht möglich, die Deckplatten zu einem geschlossenen Ring zusammenzuschweißen.

Ein weiterer Nachteil ist darin zu sehen, daß die Schweißnahtwurzeln in den Fußplatten unkontrollierbar sind, weswegen aus Sicherheitsgründen zumindest die rißanfällige Wurzelnaht herauszubohren ist.

Den in den Ansprüchen 1 und 5 gekennzeichneten Erfindungen liegt deshalb die Aufgabe zugrunde, ein Herstellverfahren der eingangs genannten Art zu schaffen, bei welchem die Rißgefahr selbst bei vorhandenen Kerben minimiert wird und mit dem ein Regelrad herstellbar ist, das im Hinblick sowohl auf extrem hohe Beanspruchungen durch Dampfkräfte und Fliehkräfte als auch auf Schaufelgeometrie und Schaufelanzahl optimiert werden kann.

Als besonderer Vorteil ist anzusehen, daß die Schweißnähte der Schaufelfüße der Prüfung zugänglich sind.

In der Zeichnung sind drei Ausführungsbeispiele des erfindungsgemäßen Regelrades schematisch dargestellt.

Es zeigen:

Fig. 1 in perspektivischer Ansicht ein aus vier Schaufeln bestehendes Ringsegment.

Fig. 2 die Stirnansicht einer ersten Schweißvariante.

Fig. 3 einen Ausschnitt eines zum Schweißen vorbereiteten Ringes.

Fig. 4 einen Ausschnitt des auf den Rotor aufgeschweißten Ringes.

Fig. 5 einen Ausschnitt des fertig bearbeiteten Laufrades.

Fig. 6 die Stirnansicht einer zweiten Schweißvariante.

Fig. 7 einen Ausschnitt eines geschweißten Ringes nach einer dritten Schweißvariante.

In den Figuren, in denen die gleichen Elemente jeweils mit denselben Bezugszeichen versehen sind, sind nur die für das Verständnis der Erfindung wesentlichen Teile aufgeführt. So ist beispielsweise der Hochdruckrotor der Dampfturbine in seiner Gesamtheit nicht gezeigt.

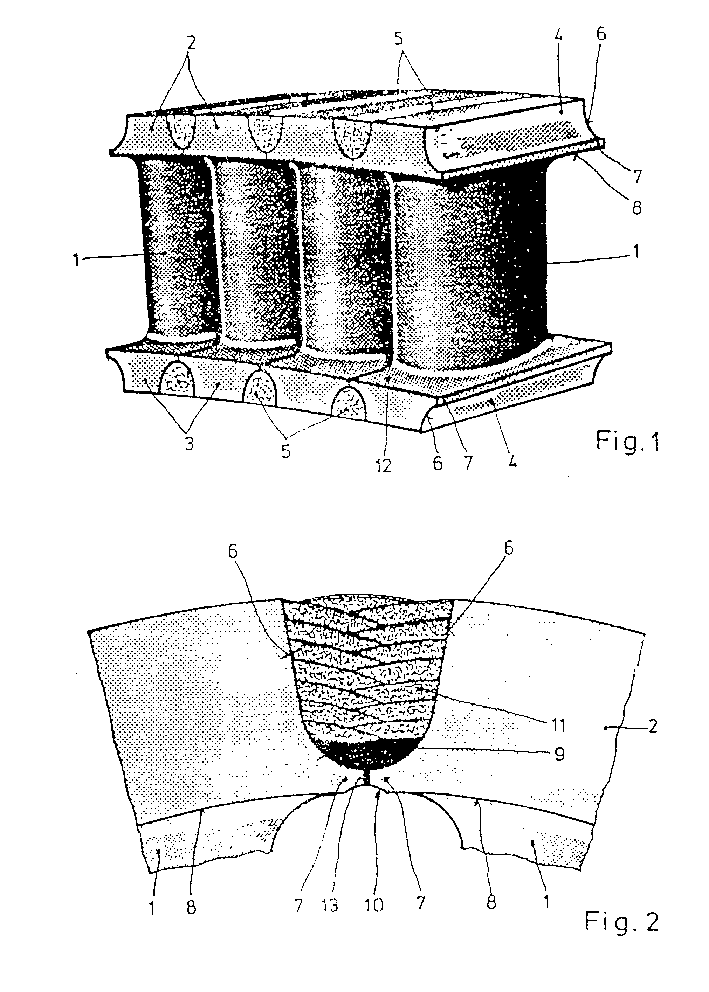

Das Regelrad, das in Fig. 1 nur teilweise dargestellt ist, besteht aus einem allseits geschlossenen Ring von zusammengefügten Einzelschaufeln. Diese Einzelschaufeln, welche ein Schaufelblatt 1, eine Deckplatte 2 und eine Fußplatte 3 aufweisen, werden in der Regel aus dem vollen Material herausgearbeitet. Im vorliegenden Fall handelt es sich um einen vergütbaren, warmfesten, hochlegierten CrMoV-Stahl, beispielsweise X22CrMoV121 nach DIN 17240.

Die Deckplatten 2 und die Fußplatten 3 sind mit jeweils zwei Schweißnuten 4 versehen, die mit Quernähten 5 ausgefüllt sind.

Die Nahtvorbereitung ist aus Fig. 2 ersichtlich. Die Flanken 6 der Schweißnut 4 verlaufen V-förmig. Selbstverständlich kann gerade so gut eine U-Form oder ein sonst geeigneter Flankenverlauf gewählt werden. Die Flanken 6 laufen jeweils in einer Schweißlippe 7 aus, die aneinandergrenzend eine Stoßfuge 13 bilden. Die Schweißlippen 7 sind unmittelbar an der dem Schaufelblatt 1 zugekehrten Unterseite 8 der Deckplatte 2 resp. der Oberseite 12 der Fußplatte 2 (Fig. 1) angeordnet.

Die Grundnaht 9 besteht aus einer nach dem Wolfram-Inertgas-Verfahren (WIG) mit Zusatzmaterial hergestellten Schweißung. Der besseren Übersichtlichkeit wegen sind die Lippen 7 in ihrem Zustand vor dem Grundnahtschweißen dargestellt. Es versteht sich, daß diese Lippen beim Schweißen mindestens teilweise aufgeschmolzen werden und zur Nahtwurzel erstarren. Dadurch, daß die Schweißlippen 7 am jeweils äußersten Ende der Platten angeordnet sind, sind die gebildeten Wurzeln einer nachträglichen Bearbeitung und Prüfung zugänglich.

Die Füllnaht 11 wird durch Handschweißung mittels ummantelter Elektrode hergestellt. Durch abwechselndes Anlegen der Schweißraupen an die eine und die andere Flanke 6 werden diese miteinander verbunden.

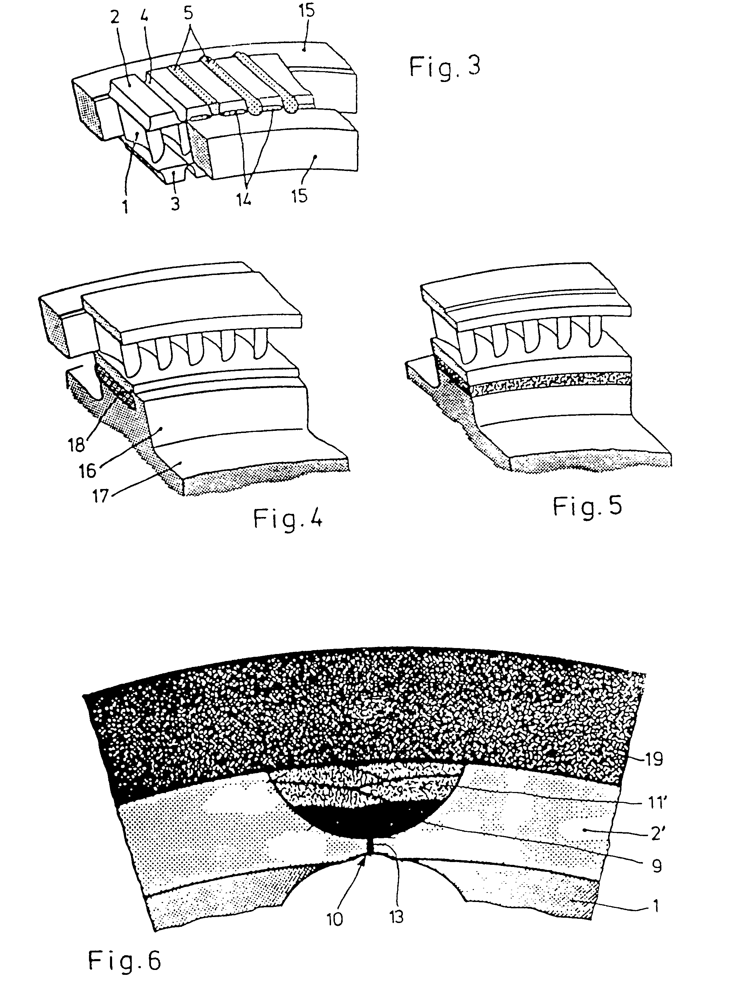

Wie das Zusammenschweißen der einzelnen Schaufeln erfolgt, ist in Fig. 3 skizziert. Die Schaufeln werden zu einem Ring zusammengestellt. Beidseitig werden mittels Heftnähten 14 Schweißringe 15 gasdicht an die Schaufeln angeschweißt, da die Grundnahtschweißung in Schutzgasatmosphäre erfolgt.

Es folgt die zu Fig. 2 beschriebene Grundnaht- und Füllnahtschweißung, wobei jede Schaufel mit ihren benachbarten Schaufeln zu einem sowohl an den Deckplatten 2 als auch an den Fußplatten 3 geschlossenen Ring verbunden wird. Danach wird das fertig geschweißte Regelrad einer Wärmebehandlung unterzogen.

Unmittelbar nach dem Schweißen wird das Regelrad direkt aus der Schweißwärme auf die Weichglühtemperatur von ca. 700 °C aufgeheizt. Während der Glühphase vollzieht sich im Schweißgut und in der Wärmeeinflußzone eine isotherme Umwandlung. Die dabei entstehende Gefügeart ist technisch nicht brauchbar. Indessen besteht bei diesem Verfahrensschritt keine Rißgefahr, da die Umwandlungsspannungen bei 700 °C gering sind, die Schweißspannungen abgebaut sind und die Zähigkeit besser als jene von Martensit ist. Nach vollzogenem Weichglühen wird das Regelrad an der Luft abgekühlt.

Nunmehr kann die mechanische Bearbeitung vorgenommen werden, die alle Operationen umfaßt, die bis zur Bereitstellung des auf eine Scheibe 16 des Rotors 17 aufzuschweißenden Regelrades erforderlich sind. Die Schweißringe 15 werden abgestochen und die Stirnseiten des Rades können auf Maß gedreht werden. Insbesondere ist hier das Entfernen der Nahtwurzel für Deckplatten- und Fußplattenschweißungen zu erwähnen, wie dies in Fig. 2 mit dem Pfeil 10 angedeutet ist. Diese Wurzel sowie etwelche vorhandene Restspalte werden beispielsweise ausgefräst und anschließend poliert. Sie sind danach der üblichen Ultraschall- und der Magnetpulverprüfung zugänglich.

Nach durchgeführten Prüfungen erfolgt der wesentliche Schritt des Vergütens. Hierzu werden die Schweißringe 15 wiederum gasdicht angebracht, da während der Glühungen mit Schutzgas, beispielsweise Argon, gespült wird. Das Vergüten selbst besteht zum ersten aus einem Härtevorgang, d.h. einem Aufheizen auf über 1000 °C mit darauffolgendem Abkühlen mittels Preßluft oder Sprühnebel und zum zweiten aus einem Anlaßvorgang bei Glühtemperaturen um 700 °C mit anschließender Ofenabkühlung auf Raumtemperatur.

Nach Beendigung des Vergütens wird die Fußpartie des Regelrades zum Aufschweißen auf die Scheibe 16 des Rotors 17 fertig gedreht. Das Aufschweißen, welches schematisch in Fig. 4 dargestellt ist, wird mittels einer großen Tulpennaht 18 nach dem Unterpulververfahren durchgeführt.

Die fertig bearbeitete Radpartie, bei der der Übergang vom Rotor zu den Schaufeln beidseitig glatt überdreht ist, ist in Fig. 5 gezeigt. Zu beachten ist hier, daß die zur Rißbildung neigende Wurzelnaht der Tulpenschweißung 18 abgedreht ist. Regelrad und Rotor bilden nunmehr eine unlösbare Einheit.

Die in Fig. 6 gezeigte Variante weist den Vorteil auf, daß die die Deckplatten und Fußplatten verbindenden Quernähte klein gehalten werden.

Die aus einem Rohling herausgearbeiteten Einzelschaufeln weisen hier relativ dünne, beispielsweise 4 mm dicke Fußplatten resp. Deckplatten 2' auf, die nach dem Zusammenschweißen einen schmalen Kranz bilden. Im gezeigten Fall besteht die Quernaht aus einem mittels WIG-Verfahren hergestellten Grundnaht 9 sowie einer von Hand in wenigen Lagen aufgebrachten Füllnaht 11'. Über die ganze Plattenbreite wird anschließend — vorzugsweise automatisch — in Umfangsrichtung des Regelrades eine Schweißnaht 19 mittels Unterpulver-Verfahren aufgebracht. Man hat damit ein Mittel zur Hand, die Deckband- resp. Fußbandhöhe beliebig zu vergrößern. In Anbetracht der weniger umfangreichen Handschweißungen könnte sich diese Lösung hinsichtlich noch besserer Qualität anbieten.

Unter Umständen kann sogar auf die mittels ummantelter Elektrode von Hand aufgetragene Schicht 11' ganz verzichtet werden, d.h. die Rundum-Schicht 19 könnte unmittelbar auf die nach dem WIG-Verfahren aufgebrachte Grundnaht 9 aufgeschweißt werden.

Selbstverständlich ist die Erfindung nicht auf die bisher gezeigten und beschriebenen Lösungen beschränkt. Anstelle der WIG-Grundnaht bei den Ausführungen nach Fig. 2 und 6 könnten die Deckplatten resp. Fußplatten in einem ersten Verfahrensschritt mittels Elektronenstrahl-, Plasma- oder Laserstrahl-Schweißverfahren miteinander verbunden werden. Es versteht sich, daß in diesen Fällen die zu verschweißenden Stoßfugen entsprechend anders auszubilden sind.

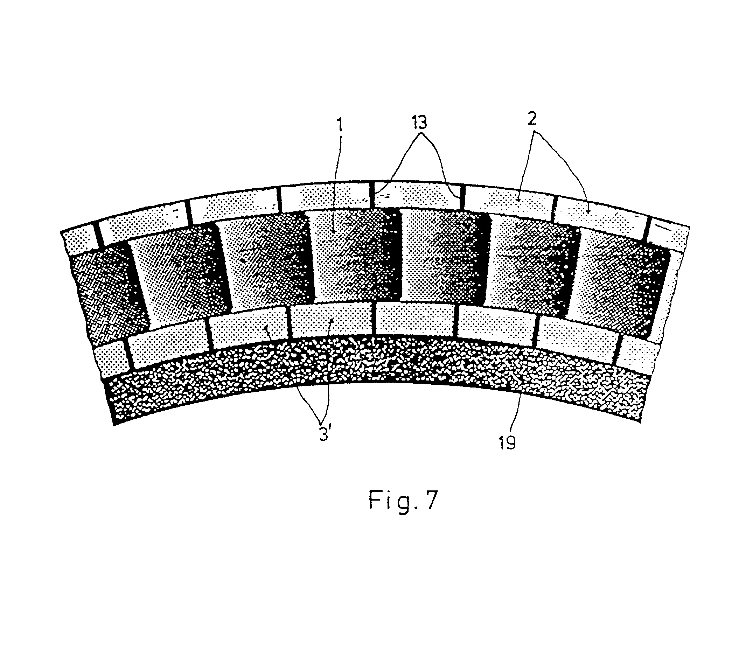

Fig. 7 zeigt eine Ausführungsvariante, bei der die Deckplatten 2 und die Fußplatten 3' über ihre ganze radiale Erstreckung an den Stoßfugen 13 mittels Elektronenstrahlschweißung verbunden sind. Die Fußplatten 3', die hier eine extrem große Stärke aufweisen – selbstverständlich aber ebenso gut einen schmalen Kranz wie die Deckplatten 2' in Fig. 6 bilden könnten – sind mit einem nach dem Unterpulververfahren hergestellten Rundumauftrag 19 versehen.

## Patentansprüche

1. Verfahren zum Herstellen eines Regelrades für den Hochdruckrotor einer Dampfturbine mit den folgenden Schritten:
– Die in der Regel aus dem vollen Material – vorzugsweise einem warmfesten, hochlegierten CrMoV-Stahl – gearbeiteten Einzelschaufeln mit integrierten Deck- und Fußplatten werden zunächst zu einem Ring zusammengestellt;
– alle Einzelschaufeln werden mit ihren jeweils benachbarten Schaufeln an den Fußplatten (3) und den Deckplatten (2) zu einem allseits geschlossenen Ring zusammengeschweißt;
– nach dem Schweißen wird der Ring ohne Abkühlung auf Weichglühtemperatur aufgeheizt, wobei Schweißgut und Wärmeeinflußzone isotherm umgewandelt werden;
– nach einer mechanischen Bearbeitung und einer Prüfung wird der Ring vergütet und hierbei erhalten die Schweißverbindungen die gleichen Eigenschaften wie der Grundwerkstoff;
– worauf der Ring auf eine entsprechende Scheibe (16) des Rotors (17) aufgeschweißt wird.

2. Verfahren nach Anspruch 1, dadurch gekennzeichnet, daß die Schaufeln an ihren Stoßfugen (13) durch eine mittels Elektronenstrahl-, Plasma-, Laserstrahl- oder Argonarc-Schweißverfahren erzeugte Grundnaht (9) mit oder ohne Zusatzwerkstoff verschweißt werden, und daß hierauf die durch eine Schweißnut (4) gebildete Flanke (6) durch abwechselnd sich an die eine und an die andere Flanke anliegende, die Füllnaht (11) bildende Schweißraupe verbunden werden, beispielsweise von Hand mittels ummantelter Elektroden.

3. Verfahren nach Anspruch 1, dadurch gekennzeichnet, daß die Schaufeln an ihren Stoßfugen (13) mittels Elektronenstrahl-, Plasma- oder Laserstrahl-Schweißverfahren mit oder ohne Zusatzwerkstoffe verschweißt werden.

4. Verfahren nach Anspruch 2 oder 3, dadurch gekennzeichnet, daß nach dem Zusammenschweißen der Fuß- und Deckplatten deren radiale Erstreckung dadurch vergrößert wird, daß in Umfangsrichtung des Regelrades verlaufende Schweißraupen nach dem Unterpulververfahren in mehrere Lagen aufgebracht werden.

5. Zum Aufschweißen auf den Hochdruckrotor einer Dampfturbine bestimmtes Regelrad, bestehend aus einem Ring von zusammengestellten Einzelschaufeln, die an ihren Deckplatten (2) und Fußplatten (3) mit Schweißnuten (4) versehen sind, wobei die Nahtvorbereitung an den Deckplatten (2) aus einer V-Naht oder einer U-Naht besteht und in einer, eine Stoßfuge (13) bildende Schweißlippe (7) ausläuft, welche unmittelbar an der dem Schaufelblatt (1) zugekehrten Seite (8) der Deckplatte (2) angeordnet ist, dadurch gekennzeichnet, daß auch die Nahtvorbereitung an den Fußplatten (3) aus einer V-Naht oder einer U-Naht besteht und in einer, eine Stoßfuge (13) bildende Schweißlippe (7) ausläuft, welche unmittelbar an der dem Schaufelbrett (1) zugekehrten Seite (12) der Fußplatte (3) angeordnet ist; und daß bei Vermeidung von Gruppenbildung jede Einzelschaufel mit ihren benachbarten Schaufeln sowohl an der Deckplatte (2) als auch an der Fußplatte (3) zusammengeschweißt ist.

6. Regelrad nach Anspruch 5, dadurch gekennzeichnet, daß die Deckplatten (2') und/oder Fußplatten (3') der Einzelschaufeln in ihrer radialen Erstreckung zunächst aus einem, in der Regel mit dem Schaufelblatt (1) zusammen aus dem vollen Material gearbeiteten schmalen Kranz bestehen, auf den nach dem Zusammenschweißen zu einem Ring eine Schweißschicht (19) beliebiger Stärke aufgetragen ist.

## Claims

1. Method for manufacturing a control wheel for the high-pressure rotor of a steam turbine with the following steps:
– the individual blades with integrated shrouds and root platforms usually machined from solid material – preferably a heat-resistant, highly alloyed CrMoV steel – are first put together to form a ring;
– all the individual blades are welded to their neighbouring blades at the root platforms (3) and the shrouds (2) to form a ring closed on all sides;
– the ring is heated after welding, without cooling, to the annealing temperature, the weld material and the heat-affected zone being isothermally transformed;
– after machining and testing, the ring is heat-treated, the weld connections obtaining by this means the same properties as the base material;
– the ring is then welded onto a corresponding disk (16) of the rotor (17).

2. Method according to Claim 1, characterized in that the blades are welded at their butt joints (13) by a foundation seam (9) produced by means of electron beam, plasma beam, laser beam or argon arc welding methods with or without additive material, and that this is followed by the flank (6) formed by a welding groove (4) being connected by welding runs applied alternately to one and the other flank and forming the filling seam (11), for example by hand welding using coated electrodes.

3. Method according to Claim 1, characterized in that the blades are welded at their butt joints (13) by means of electron beam, plasma beam or laser beam welding methods with or without additive material.

4. Method according to Claim 2 or 3, characterized in that after welding together the root platforms and shrouds, the radial extent of the latter is increased by applying several layers of weld runs in the peripheral direction of the control wheel, using the submerged arc process.

5. Control wheel intended for welding onto the high-pressure rotor of a steam turbine, consisting of a ring assembled from individual blades, which are provided with welding grooves (4) on their shrouds (2) and root platforms (3), the seam preparation on the shrouds (2) consisting of a V-groove or a U-groove and running out to a welding lip (7) forming a butt joint (13), which welding lip is located directly on the side (8) of the shroud (2) directed towards the blade aerofoil (1), characterized in that the seam preparation at the root platforms (3) also consists of a V-groove or a U-groove and runs out to a welding lip (7) forming a butt joint (13), which welding lip is located directly on the side (12) of the root platform (3) directed towards the blade aerofoil (1); and, avoiding the formation of groups, each individual blade is welded together with its neighbouring blades both at the shroud (2) and at the root platform (3).

6. Control wheel according to Claim 5 characterized in that the shrouds (2') and/or root platforms (3') of the individual blades consist in their radial extension of, first, a narrow collar generally machined, together with the blade aerofoil (1), from solid material, on which narrow collar (after welding together to form a ring) a layer of weld (19) of any given thickness is applied.

**Revendications**

1. Procédé de fabrication d'une roue de régulation pour le rotor haute pression d'une turbine à vapeur, comportant les opérations suivantes:

– les aubes individuelles avec plaques de tête et de pied intégrées, généralement usinées à partir d'un matériau massif – de préférence un acier CrMoV réfractaire fortement allié – sont d'abord réunies en un anneau;

– toutes les aubes individuelles sont soudées à chacune des aubes voisines par les plaques de pied (3) et les plaques de tête (2) en un anneau fermé de tous les côtés;

– après le soudage, l'anneau est, sans refroidissement, chauffé jusqu'à une température de recuit d'adoucissement, ce qui provoque la transformation isotherme du métal déposé et de la zone influencée thermiquement;

– après un usinage mécanique et un contrôle, l'anneau est trempé et revenu et ainsi les soudures acquièrent les mêmes propriétés que le matériau de base;

– et l'anneau est ensuite soudéd sur le disque correspondant (16) du rotor (17).

2. Procédé suivant la revendication 1, caractérisé en ce que les aubes sont soudées à leurs joints d'about (13) par un cordon de base (9) réalisé par soudage au faisceau d'électrons, au jet de plasma, au faisceau laser ou à l'arc sous argon, avec ou sans matériau d'apport, et en ce qu'ensuite les flancs (6) formés par une gorge de soudage (4) sont reliés l'un à l'autre par des chenilles de soudure posées alternativement à l'un et à l'autre flanc, par exemple manuellement au moyen d'électrodes enrobées, et formant le cordon de remplissage (11).

3. Procédé suivant la revendication 1, caractérisé en ce que les aubes sont soudées à leurs joints d'about (13) par soudage au faisceau d'électrons, au jet de plasma ou au faisceau laser, avec ou sans matériau d'apport.

4. Procédé suivant la revendication 2 ou 3, caractérisé en ce qu'après l'assemblage des plaques de pied et de tête par soudage, leur longueur radiale est accrue du fait que des cordons de soudure sont déposés en plusieurs couches dans la direction de la périphérie de la roue de régulation, suivant le procédé sous flux.

5. Roue de régulation destinée à être soudée sur le rotor haute pression d'une turbine à vapeur, se composant d'un anneau d'aubes individuelles réunies qui sont pourvues de gorges de soudage (4) à leurs plaques de tête (2) et à leurs plaques de pied (3), dans laquelle le profil du cordon aux plaques de tête (2) consiste en un cordon en V ou en U et se termine par une lèvre de soudage (7) formant un joint d'about (13), lèvre qui est disposée immédiatement à la face (8) de la plaque de tête (2) qui est tournée vers la pale (1), caractérisée en ce que dans les plaques de pied (3) également, le profil du cordon consiste en un cordon en V ou en U et se termine par une lèvre de soudage (7) formant un joint d'about (13), lèvre qui est disposée immédiatement à la face (12) de la plaque de pied (3) qui est tournée vers la pale (1); et en ce que en évitant la formation de groupes, chaque aube individuelle est soudée aux aubes voisines, aussi bien à la plaque de tête (2) qu'à la plaque de pied (3).

6. Roue de régulation suivant la revendication 5, caractérisée en ce que les plaques de tête (2') et/ou les plaques de pied (3') des aubes individuelles se composent, suivant leur dimension radiale, d'abord d'une couronne étroite généralement usinée d'une pièce avec la pale (1) à partir du matériau massif, sur laquelle est appliquée, après le soudage d'assemblage en un anneau, une couche de soudure (19) d'épaisseur arbitraire.

Fig. 1

Fig. 2

Fig. 3

Fig. 4

Fig. 5

Fig. 6

Fig. 7